# EUROPEAN PATENT SPECIFICATION

(11) **EP 4 125 170 B1**
(45) Date of publication and mention of the grant of the patent: **03.09.2025**
(21) Application number: 21187965.5
(22) Date of filing: 27.07.2021
(51) Int. Cl.: H02H 9/04, H01C 8/04, H01C 7/12

(54) **APPARATUS AND METHOD FOR PREVENTING AND DAMPING OF VOLTAGE AND CURRENT PEAKS OF EXTERNAL AND INTERNAL ORIGIN FOR LOW VOLTAGE ELECTRICAL SUPPLY PLANTS**
VORRICHTUNG UND VERFAHREN ZUR VERMEIDUNG UND DÄMPFUNG VON SPANNUNGS- UND STROMSPITZEN EXTERNEN UND INTERNEN URSPRUNGS FÜR ELEKTRISCHE NIEDERSPANNUNGSVERSORGUNGSANLAGEN
APPAREIL ET MÉTHODE DE PRÉVENTION ET D'AMORTISSEMENT DE PICS DE TENSION ET DE COURANT D'ORIGINE EXTERNE ET INTERNE POUR INSTALLATIONS D'ALIMENTATION ÉLECTRIQUE À BASSE TENSION

(43) Date of publication of application: 01.02.2023
(73) Proprietor: Ingelva S.r.l., 21013 Gallarate (Varese) (IT)
(72) Inventor: DE BERNARDI, Davide, 21013 GALLARATE (VARESE) (IT)
(74) Representative: Anselmi, Davide

(56) References cited:
- EP-A1- 3 937 325
- IT-A1- VA 950 008
- KR-A- 20160 009 426

## Description

### TECHNICAL FIELD

The present invention relates to an apparatus and a method for preventing and damping of voltage and current peaks of external and internal origin for low voltage electrical supply plants (100) based on the detection and transformation of electromagnetic energy causing overvoltages and overcurrents. The term "low voltage" refers to nominal operating voltages of the electrical supply plant (100) comprised between 50 V and 1000 V for alternating current and between 120 V and 1500 V for direct current.

The term "external and internal" refers to any electromagnetic stress such as shocks, electrical vibrations (of electric charges), pulses with steep fronts of atmospheric and terrestrial origin and alternating at frequencies above the fundamental (due to manoeuvres and resonances in lines, i.e. harmonics), the latter pulses being produced by the operation of the electrodes (transport lines for the electric energy) and coming therefrom.

In particular, the apparatus arranged to be connected to the low-voltage electrical supply plant, both with direct current and alternating current (single phase or polyphase), comes in various dimensional types to meet, according to the *ratio* of its exclusive prevention method, all the levels of preventive protection of the electrical supply plant (100) and of the electrical user apparatuses connected to and supplied by the electrical supply plant (100) ; the aforesaid dimensional types are arranged to be connected from the largest to the smallest on a scale: immediately downstream of and in junction with the point of delivery of the electrical energy of the supplier body, immediately upstream of and in junction with the main switches of the electric panels, in junction with the conductors and equally distributed along distinct sections of the plant and at set pitches depending on whether the aforesaid sections are indoor or outdoor, immediately upstream of and in junction with the electrical supply inputs (in) of the electrical user apparatuses.

In yet greater detail, the apparatus is used for low voltage electrical supply plants running on alternating current single phase or polyphase industrial frequencies of 25, 45, 50 or 60 Hz, depending on the distribution lines, by connection to a conductor/conductors of the low voltage electrical supply plant (100) and to the earthing system (101), as described below.

### PRIOR ART

As is known, power lines (transport lines of the very high, high and medium voltage electric energy) to which low-voltage electrical supply plants (circuits) are connected are generally high risk structures because of the great linear extent thereof over the terrain and the intrinsic capacity thereof to attract direct and indirect lightning, they are equally dangerous because they also produce line overvoltages and overcurrents and, at the same time, they are a leading source of electromagnetic pollution (electrosmog). Currently, the so-called "protection" devices from overvoltages (international acronym: SPD, Surge Protective Device) used today (so-called "protective" discharges into air, gases, varistors, diodes) in both power lines and in low voltage electrical supply plants are limited to diverting the energy of overvoltages and overcurrents to earth, with all the known harmful and destructive effects deriving therefrom.

In particular, as known, such "protection" devices that have been used until today claim to divert to earth by an earthing system, without harm, the overvoltages and overcurrents but instead harm the environment (people and assets: the electrical supply plants themselves, the electrical user apparatuses, with fire and/or explosion hazards).

In fact, it should be noted that the devices that are currently used intervene only on the "tail" of a voltage and current pulse, thus on a pulse that has already formed, without preventing this hazard situation; for example, the varistors (dischargers with a non-linear resistance) act as an open circuit between the phase and the earthing system, whereas when an overvoltage and overcurrent occur, the impedance of the varistor is reduced for a few dozen nanoseconds and the device acts as a closed circuit, discharging the overvoltage and overcurrent to earth via the earthing system, always with all the known direct and indirect harmful and destructive effects arising therefrom: electrical discharges from the electrical system to earth, reverse electrical discharges (from earth to the electrical system) and resulting electroinduction.

An example of known prior art is disclosed in document ITVA950008 filed in the name of the same Applicant.

### OBJECTS OF THE PRESENT INVENTION

In this situation, the object of the present invention is to realise an apparatus and a method for preventing and damping of voltage and current peaks of external and internal origin for low voltage electrical supply lines which overcome the aforementioned drawbacks.

In particular, the object of the present invention is to realise an apparatus and a method for preventing and damping of voltage and current peaks of external and internal origin for low voltage electrical supply plants that enables the formation of such voltage and current peaks to be prevented. In particular, the object of the present invention is to realise an apparatus and a method for preventing and damping of voltage and current peaks of external and internal origin for low voltage electrical supply plants that enables the formation of such voltage and current peaks to be damped and dissipated, preventing the discharge to earth by the earthing system. The indicated objects are substantially achieved by an apparatus and a method for preventing and damping of voltage and current peaks of external and internal origin for low voltage electrical supply plants according to what is described herein. The invention is defined by the appended claims.

### BRIEF DESCRIPTION OF THE FIGURES

Further characteristics and advantages of the present invention will more greatly emerge from the detailed description of some preferred but not exclusive embodiments of an apparatus and a method for preventing and damping of voltage and current peaks illustrated in the appended drawings, in which:

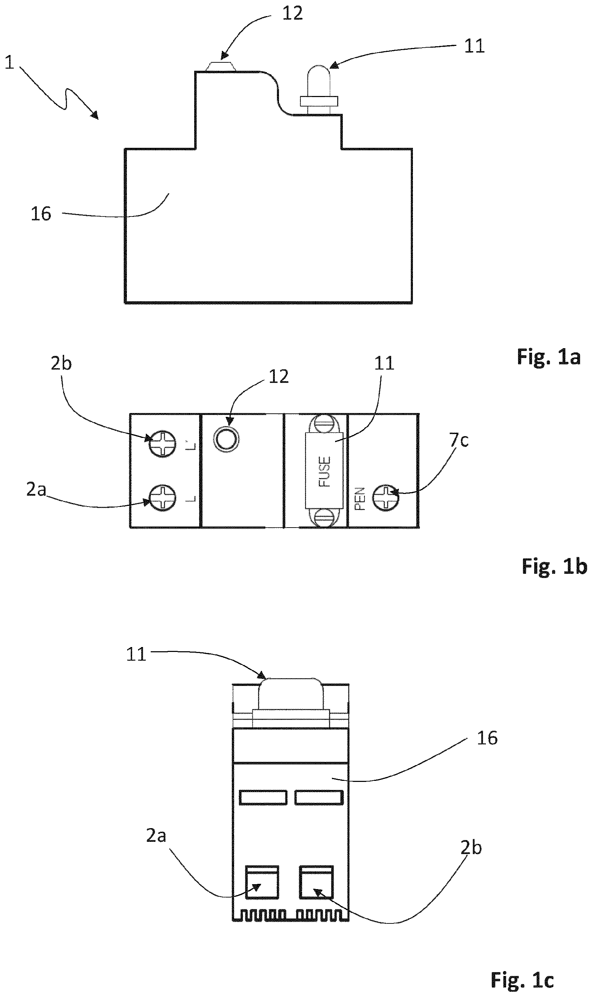

- figure 1a illustrates a side view of an apparatus according to the present invention;
- figure 1b illustrates a frontal view of the apparatus of figure 1a;
- figure 1a illustrates a dorsal view of the apparatus of figure 1a;
- figure 2a illustrates a side and transparent view of the apparatus of figure 1a;
- figure 2b illustrates a side view of the apparatus of figure 1a according to a side and opposite view;
- figure 3 is a simplified circuit diagram of the apparatus according to the present invention;
- figure 4a shows a lateral axonometric view of the content of the apparatus of figure 1a with some parts removed to better highlight others;
- figure 4b shows the contents of figure 4a in an axonometric view but according to a side that is opposite the first side;
- figures 5a, 5b show in respective top and side views a particular embodiment of the apparatus with the finned outer casing;
- figures 6a, 6b show in respective top and side views, a variant embodiment of the embodiment illustrated in figures 5a, 5b;
- figures 7a, 7b show in respective top and side views a particular embodiment of the casing (18) of the tuner-damper (3).

### DETAILED DESCRIPTION OF ONE OR MORE PREFERRED EMBODIMENTS OF THE PRESENT INVENTION

With reference to the figures cited, an apparatus for preventing and damping of voltage and current peaks of external and internal origin for low voltage electrical supply plants according to the present invention is indicated in its entirety by reference number 1.

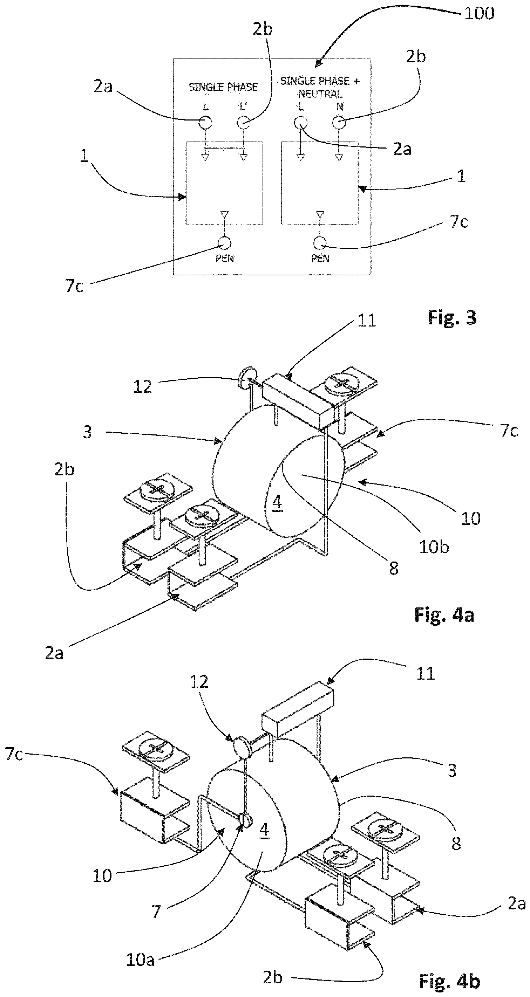

In particular, the apparatus 1 comprises at least one electrical phase input 2a, 2b, in use, connected in junction to a phase of the low voltage electrical supply plant 100 to receive an electrical (voltage) signal. Preferably, the apparatus 1 comprises two electrical phase inputs 2a, 2b in which:
- in a first configuration for a single phase plant 100, the first input is connected in junction to a phase "L", whereas the second input 2a, 2b is connected in junction to neutral (N) (right part of the drawing of figure 3);
- in a second configuration for a polyphase plant 100, the first input is connected in junction to two phases "L, L^{'}", whereas the second input 2a, 2b is connected in junction to another phase "L" and to neutral "N" (left part of the diagram of figure 3).

In the accompanying figures, these electric inputs 2a, 2b are represented by a pair of clamps or could be made as connectors or something similar.

In accordance with the present invention, the apparatus 1 comprises a tuner-damper 3 having its own casing 8 and internal volume 4, the latter comprising a mixture of an incoherent, non-hygroscopic sediment of particles (such as quartz, tourmalines, hemimorphites and the like) of a piezoelectric and pyroelectric material and a refractory inert material (dolomitic, marble grit and the like), in air, interposed between the input polar electrodes and the heat dissipation bar 7, configured to transform the energy load of the external and internal electromagnetic stress, which causes the overvoltages and overcurrents, into mechanical energy (vibrations, resulting relative movements of the particles and subsequent shocks to the particles) and into thermal energy (endogenous heat). Preferably, but not necessarily, this mixture of incoherent non hygroscopic sediment, of particles of a piezoelectric and pyroelectric material and a refractory inert material, in air, is possibly supplemented with semi-conductors (such as silicon carbide and the like) with variable valence that, adjusted together with the other essential particles of the mixture at different calibrations, contribute to preventing, absorbing and dissipating the hazardous energy load of the external and internal electromagnetic stress defined above, starting from the more energetic stress of the "head" of the voltage pulse with a steep curve of atmospheric and terrestrial origin.

The tuner-damper 3 comprises at least one first input polar electrode 5 at least partially immersed inside said mixture and in contact therewith. This input polar electrode 5 is connected to the electrical phase input 2a, 2b. Further, the tuner-damper 3 comprises at least one heat dissipation and electrically conductive bar 7 immersed inside said mixture and connected, in use, to the earthing system 101, preferably by interposing an earth-block filter (preferably Antimpatto^{®} SCt).

This heat dissipation bar 7 does not have any metal contact with the input polar electrode 5, the mixture itself being interposed between the heat dissipation bar 7 and the input polar electrode 5.

Preferably, the input polar electrode 5 comprises a metal bar 17 (for example in the form of a screw) partially inserted into the mixture.

In addition, the tuner-damper 3 can comprise a second input polar electrode connected to the second phase or neutral input 2a, 2b and at least partially immersed inside said mixture and in contact therewith. In fact, in the case of two input polar electrodes, the first and second both are partially immersed in the mixture and spaced apart from one another. Preferably, as is visible in the accompanying figures, the two input polar electrodes 5 are arranged on (diametrically) opposite sides of the tuner-damper 3.

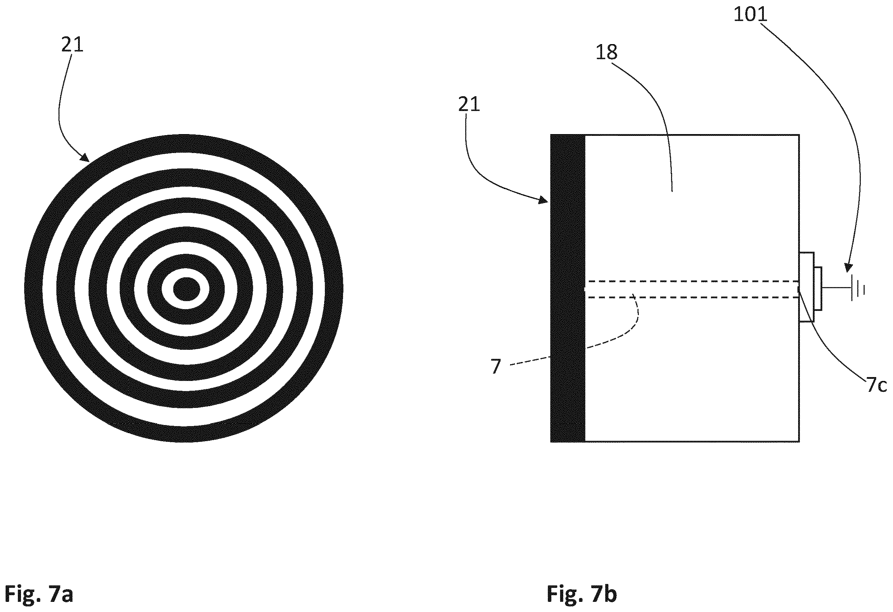

Preferably, the casing 8 (figures 4a, 4b), 18 (figures 7a, 7b) of said tuner-damper 3 is cylinder-shaped and said first input polar electrode 5 is inserted through the cylindrical casing 8 (figures 4a, 4b), 18 (figures 7a, 7b) in a given point.

The second input polar electrode is inserted through the cylindrical casing 8 (figures 4a ,4b), 18 (figures 7a, 7b), but on a side diametrically opposite the position of the first input polar electrode 5.

The heat dissipation bar 7 is positioned in the centre of the cylinder and orthogonally to the bases 10a, 10b of said cylinder. Further, the heat dissipation bar 7 and the input (in) female connectors (according to the greater axis thereof) 2a and 2b (Fig. 1c), are orthogonal to one another.

The heat dissipation bar 7 has an inner portion 7a immersed in the mixture and an outer portion 7b defining an output 7c connected, in use, to an earthing system 101.

In particular, each input polar electrode 5 extends between two opposite ends, an inner end which is immersed in the mixture and an end that is an outer end and connected to the respective phase input 2a, 2b. In addition, the inner end of the input polar electrode 5 is preferably shaped as a half sphere.

According to another aspect of the present invention, the apparatus 1 comprises a safety fuse 11 interposed along the electrical connection wire or cable present between the at least one phase input 2a, 2b and the at least one input polar electrode 5.

The fuse 11 is configured to break (with consequent opening of the circuit) when the tuner-damper 3 has tripped several times and/or has become worn and thus needs to be serviced/replaced.

Further, the apparatus 1 also comprises a signalling device 12, preferably of luminous type (LED), electrically connected between the at least one input polar electrode 5 and the heat dissipation bar 7 outside the tuner-damper 3 and configured to signal whether the device 3 is working correctly (active signal, for example switched on light) or not (light switched off). If the device is working correctly the potential difference between the input polar electrode 5 and the heat dissipation bar 7 is other than zero and thus the signal is active.

According to another aspect of the present invention, the apparatus 1 comprises a resonating antenna 13, which is preferably flat, mounted on a flat support (wafer), arranged in contact with the exterior of the casing 8, 18 of the tuner-damper 3 and configured with the object of maintaining the anti-electromagnetic pollution (electrosmog) work of the tuner damping device (3) at extremes (operating tolerance: 0%) by selectively discriminating between external and local electromagnetic radiation.

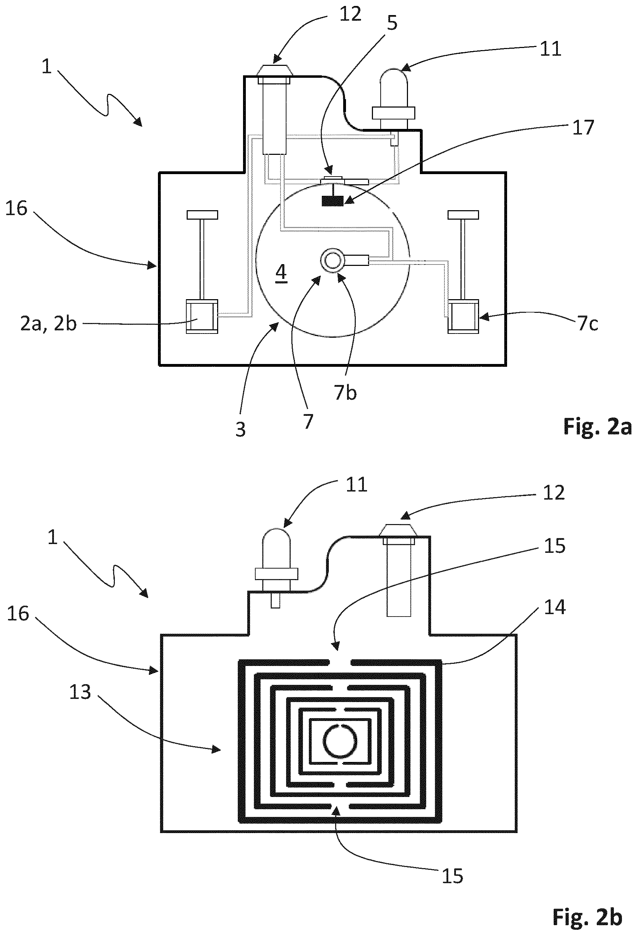

As is visible in the example of figure 2b, the resonating antenna 13 comprises a plurality of concentric metal elements 14, preferably of rectangular or square or circular shape that are separated from one another. Further, figure 2b also shows that the metal elements 14 are concentric and each is broken at a detachment point 15. Preferably, the position of this detachment point 15 between one element 14 and the other is opposed with respect to a median plane that cuts the antenna 13 orthogonally.

This resonating antenna 13 is configured to receive external signals having a frequency comprised between 100 kHz and 10 GHz.

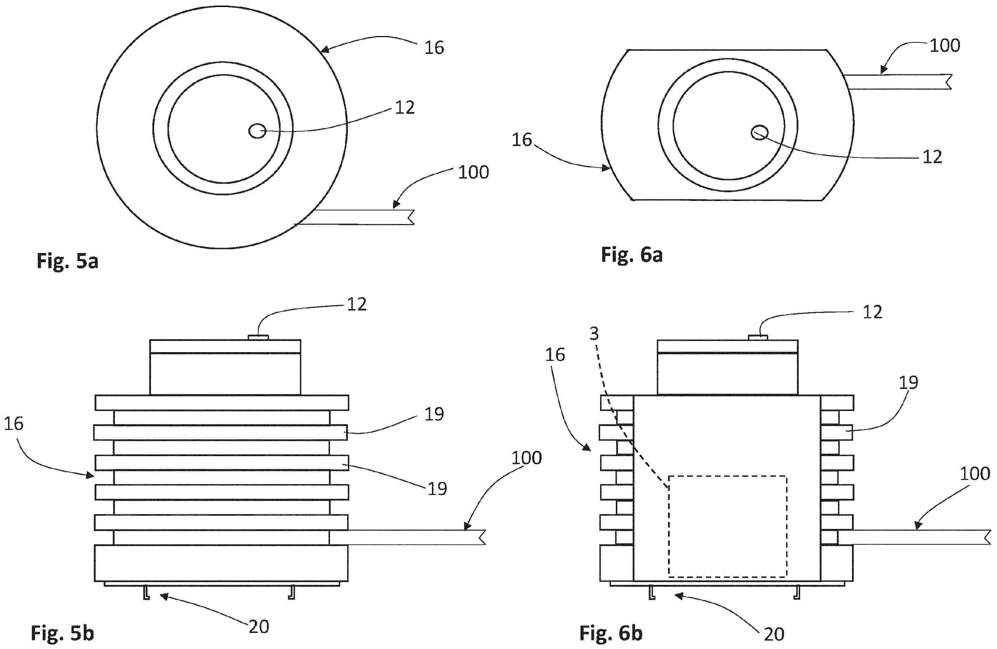

Further, as shown in figures 5a, 5b, 6a, 6b, 7a, 7b, the tuner-damper 3 is housed inside a casing 18 that is made of different materials and shapes according to the overvoltages and overcurrents that can be distinguished into three energy classes depending on the space and plant context of the formation thereof, starting from the most energetic and on a sliding scale: lateral, indirect and local.

It should be noted that in figures 5a and 6a the apparatus 1 is shown rotated 90° anticlockwise to show the perspective matching identical views 5b and 6b. In use, the apparatus 1 of the aforesaid figures is in fact rotated 90° clockwise so as to be interposed between the other modules installed on the guide DIN.

For lateral overvoltages and overcurrents, i.e. overvoltages and overcurrents coming from the transport lines of the electric energy, immediately downstream of the electricity meter 400V/230V (panel for controlling and measuring the electric energy) or downstream of the medium voltage/low voltage transformer cabinet on low voltage side, and for indirect overvoltages and overcurrents, i.e. produced by electroinduction in the electric plant (circuit), the outer casing or container 16 is made of metal material (figures 5a, 5b, 6a, 6b) having an isotropic endogenous heat distribution and dispersion characteristic (such as Dural - Duralluminium) and a finned cylindrical shape 19 or 1/4 of finned cylinder 19, joined metallically solidly to the metal dissipation bar 7 dissipating heat, shaped into a module of the type for an electrical panel adapted to be installed on a DIN guide and the like by suitable couplings 20, and in general occupies the space of four standard installation modules or of two standard installation modules, the latter version being specifically for prevention apparatuses dedicated to local electrical panels, 230V of switches of electrical user apparatuses (for example: electrical panel 230V switches- home appliances-kitchen).

On the visible front part of the outer casing 16 there are the aforesaid signalling LEDs 12.

The overall apparatus 1, in use, must be equipped with the appropriate fuses and relative fuse boxes on the basis of the polarity of the electrical supply plant 100 to which it has to be connected.

For local overvoltages and overcurrents, i.e. near and outside the electrical user apparatuses, the casing 18 of the tuner-damper 3 can be made of dielectric material, preferably polyamide (PA6) and the like, still more preferably loaded with 50% graphite.

The outer casing 16 has a shape that is similar to a normal electrical panel module adapted to be installed on a DIN guide and the like and occupies the space of two standard installation modules.

With reference to the embodiment of the invention shown in figures 7a, 7b, the end of the heat dissipation bar 7 arranged on the opposite side of the connection (in use) to an earthing system 101, is joined firmly metallically to a metal finned plate/crown 21 (such as Dural - Duralluminium) for dissipating heat, which also acts as a cover. The fins of the plate/crown 21 are concentric and made of alternating projections and recesses with a circular shape (shown in figure 7a with alternating black and white crowns).

The casing made of polyamide (PA6) and the like is adapted specifically to bipolar connections (phase+neutral) of the prevention apparatus near the electrical user apparatus and with two installation methods: on a DIN guide and the like constrained directly on the wall and, with two or more prevention units that are the object of this patent, arranged with an interaxis equal to the thickness of the prevention units; or, also on a DIN guide and similar inside dedicated boxes arranged by Ingelva, pre-cabled, in an insulating case, with at least an IP55 protection rating and, also in this option, with two or more prevention units that are the object of this patent, arranged with an interaxis that is equal to the thickness thereof. On the visible front part of the casing, there are the aforesaid signalling LEDs and fuse 11.

The present invention further relates to a single phase or polyphase low voltage electrical supply plant 100 and the apparatus 1 described above to which at least one electrical phase conductor of the aforesaid electrical supply plant is connected in junction by the phase input 2a, 2b to prevent, absorb, damp and dissipate the energy load of the electromagnetic stress, which causes the overvoltages and overcurrents, relating to the electrical phase conductor, transforming the energy load into mechanical energy (vibrations, resulting relative movements of the particles and subsequent shocks to the particles) and into thermal energy (endogenous heat).

In this manner, discharging the energy load to earth is avoided.

The present invention achieves the set objects with the intrinsic and exclusive ability to ensure safety.

The apparatus 1 serves for preventing, absorbing, damping and dissipating also the disturbance phenomena present in the low voltage electrical supply plant (100), such as harmonics and spurious emissions, which are harmful not only to the electrical supply plant itself but particularly also to electrical and electronic user apparatuses supplied by the electrical supply plant.

In addition to the functions cited above, the apparatus 1 also neutralises local electromagnetic pollution (electrosmog), i.e. near the apparatus itself. The present invention thus also solves disturbance phenomena, harmonic and spurious, and local electromagnetic pollution (electrosmog) phenomena, always with the intrinsic and exclusive ability to ensure safety.

## Claims

1. An apparatus (1) for preventing and damping of voltage and current peaks of internal and external origin with respect to a low voltage electrical supply plant (100), based on detection and transformation of electromagnetic energy causing overvoltages and overcurrents, comprising:
at least one phase input (2a, 2b) connected, in use, in junction to a phase of the electrical supply plant (100) to receive an electric voltage signal;
a tuner-damper (3) having its own casing (8; 18) and internal volume (4), the latter comprising a mixture of an incoherent, non-hygroscopic sediment of particles of a piezoelectric and pyroelectric material and a refractory inert material, in air, configured to transform the energy load of outer and inner electromagnetic stress, that causes the overvoltages and overcurrents, into mechanical energy and into heat energy;
said tuner-damper (3) comprising at least one first input polar electrode (5) partially immersed inside said mixture and in contact therewith; said input polar electrode (5) being connected to the phase input (2a, 2b) to receive said electrical signal;
said tuner-damper (3) comprising at least one heat dissipation and electrically conductive bar (7) at least partially immersed inside said mixture,
**characterised in that** said heat dissipation and electrically conductive bar (7) is connected, in use, to an earthing system (101).

2. The apparatus (1) according to claim 1, **characterised in that** said incoherent sediment of which the mixture is composed, which is inserted into the internal volume (4) of the tuner-damper (3), comprises a semiconductor.

3. The apparatus (1) according to any one of the preceding claims, **characterised in that** the casing (8; 18) of said tuner-damper (3) is shaped as a cylinder and said first input polar electrode (5) is inserted through the cylindrical casing (8; 18) in a given point, said dissipation bar (7) being inserted through a base (10) of said cylinder substantially in a central position and orthogonally to the base (10).

4. The apparatus (1) according to any one of the preceding claims, **characterised in that** said first input polar electrode (5) extends between two opposite ends, an inner one being immersed partially in the mixture and an outer one being connected to the phase input (2a, 2b), said inner end being shaped as a half sphere.

5. The apparatus (1) according to any one of the preceding claims, **characterised in that** it comprises a second phase input (2a, 2b) connected, in use, to a further phase of the low voltage electrical supply plant (100); said tuner-damper (3) comprising at least one second input polar electrode, separated from the first, and partially immersed inside said mixture and in contact therewith; said second phase input (2a, 2b) being connected to said second input polar electrode.

6. Apparatus (1) according to any one of the preceding claims, **characterised in that** said tuner-damper device (3) is housed inside a casing (18) which is made of dielectric material and comprises a finned metal plate/crown (21), which also acts as a cover, which is arranged at the end of the heat interception bar (7) opposite the end connecting to the earthing system (101) and connected thereto to achieve heat dissipation.

7. The apparatus (1) according to any one of the preceding claims, **characterised in that** it comprises a safety fuse (11) interposed along an electrical connection between the least one phase input (2a, 2b) and the at least one input polar electrode (5) .

8. The apparatus (1) according to any one of the preceding claims, **characterised in that** it comprises a signalling device (12), preferably of luminous type, electrically connected between the at least one input polar electrode (5) and the heat dissipation bar (7) outside the tuner-damper device (3).

9. The apparatus (1) according to any one of the preceding claims, **characterised in that** it comprises a resonating antenna (13) arranged in contact with an outside of the casing (8) of the tuner-damper (3) and configured to maintain anti-electrosmog work of the tuner-damper (3) at extremes by selectively discriminating between external and local electromagnetic radiation.

10. The apparatus (1) according to claim 9, **characterised in that** said antenna (13) is preferably flat, mounted on a flat support and comprises a plurality of concentric metal elements (14), preferably of rectangular or square or circular shape, which are separate from one another.

11. The apparatus (1) according to claim 10, **characterised in that** each of said metal elements (14) is broken at a detachment point (15) and the position of this detachment point (15) between one element (14) and the other is opposed with respect to a median plane that cuts the antenna (13) orthogonally.

12. The apparatus (1) according to any one of the preceding claims, **characterised in that** it comprises an outer casing or container (16) that houses the rest of the apparatus (1), wherein said outer casing or container (16) is shaped as a module for an electrical panel adapted to be installed on a DIN guide.

13. Apparatus (1) according to claim 12, **characterised in that** said outer casing (16) is made of metal and externally finned material (19); said casing being in contact with said metal dissipation bar (7) so as to distribute and disperse endogenous heat.

14. Apparatus (1) according to any one of the preceding claims, **characterised in that** it is further formed and configured to also solve disturbance phenomena defined by harmonics and spurious emissions that are harmful not only to the electrical supply plant but also particularly to electric and electronic user apparatuses, especially if they are sophisticated, that are powered by the apparatus, always with the intrinsic and exclusive ability to ensure safety.

15. Apparatus (1) according to any one of the preceding claims, **characterised in that** it is further formed and configured to also solve local electromagnetic pollution or electrosmog, i.e. near the apparatus itself, always with the intrinsic and exclusive ability to ensure safety.

16. A low voltage electrical supply plant (100) comprising:
- one or more electric phase conductors; and
- an apparatus (1) according to any one of the preceding claims, wherein at least one electric phase conductor is connected in junction to the phase input (2a, 2b) so as to transform the energy load of outer and inner electromagnetic stress, that causes overvoltages and overcurrents, into mechanical energy and into heat energy.

## Patentansprüche

1. Vorrichtung (1) zur Vermeidung und Dämpfen von Spannungs- und Stromspitzen internen und externen Ursprungs in Bezug auf eine elektrische Niederspannungsversorgungsanlage (100), basierend auf der Erfassung und Umwandlung von elektromagnetischer Energie, die Überspannungen und Überströme verursacht, umfassend:
mindestens einen Phaseneingang (2a, 2b), der im Gebrauch unter Schaltung mit einer Phase der elektrischen Versorgungsanlage (100) verbunden ist, um ein elektrisches Spannungssignal zu empfangen;
einen Tuner-Dämpfer (3) mit einem eigenen Gehäuse (8; 18) und Innenvolumen (4), wobei letzteres eine Mischung aus einem inkohärenten, nicht-hygroskopischen Sediment von Partikeln aus einem piezoelektrischen und pyroelektrischen Material und einem feuerfesten inerten Material in Luft umfasst, die dazu ausgelegt ist, die Energiebelastung externer und interner elektromagnetischer Belastung, die die Überspannungen und Überströme verursacht, in mechanische Energie und in Wärmeenergie umzuwandeln;
wobei der Tuner-Dämpfer (3) mindestens eine erste polare Eingangselektrode (5) umfasst, die teilweise in die Mischung eingetaucht ist und mit dieser in Kontakt steht;
wobei die polare Eingangselektrode (5) mit dem Phaseneingang (2a, 2b) verbunden ist, um das elektrische Signal zu empfangen;
wobei der Tuner-Dämpfer (3) mindestens eine Wärmeableitungs- und elektrisch leitfähige Stange (7) umfasst, die mindestens teilweise in die Mischung eingetaucht ist,
**dadurch gekennzeichnet, dass** die Wärmeableitungs- und elektrisch leitfähige Stange (7) im Gebrauch mit einem Erdungssystem (101) verbunden ist.

2. Vorrichtung (1) nach Anspruch 1, **dadurch gekennzeichnet, dass** das inkohärente Sediment, aus dem die Mischung zusammengesetzt ist, die in das Innenvolumen (4) des Tuner-Dämpfers (3) eingeführt ist, einen Halbleiter umfasst.

3. Vorrichtung (1) nach einem der vorhergehenden Ansprüche, **dadurch gekennzeichnet, dass** das Gehäuse (8; 18) des Tuner-Dämpfers (3) zylinderförmig ist und die erste polare Eingangselektrode (5) durch das zylindrische Gehäuse (8; 18) an einem bestimmten Punkt eingeführt ist, wobei die Ableitungsstange (7) durch eine Basis (10) des Zylinders im Wesentlichen in einer zentralen Position und orthogonal zu der Basis (10) eingeführt ist.

4. Vorrichtung (1) nach einem der vorhergehenden Ansprüche, **dadurch gekennzeichnet, dass** sich die erste polare Eingangselektrode (5) zwischen zwei gegenüberliegenden Enden erstreckt, wobei ein inneres Ende teilweise in die Mischung eingetaucht ist und ein äußeres Ende mit dem Phaseneingang (2a, 2b) verbunden ist, wobei das innere Ende als eine Halbkugel geformt ist.

5. Vorrichtung (1) nach einem der vorhergehenden Ansprüche, **dadurch gekennzeichnet, dass** sie einen zweiten Phaseneingang (2a, 2b) umfasst, der im Gebrauch mit einer weiteren Phase der elektrischen Niederspannungsversorgungsanlage (100) verbunden ist; wobei der Tuner-Dämpfer (3) mindestens eine zweite polare Eingangselektrode umfasst, die von der ersten getrennt ist und teilweise in die Mischung eingetaucht ist und mit dieser in Kontakt steht; wobei der zweite Phaseneingang (2a, 2b) mit der zweiten polaren Eingangselektrode verbunden ist.

6. Vorrichtung (1) nach einem der vorhergehenden Ansprüche, **dadurch gekennzeichnet, dass** die Tuner-Dämpfer-Einrichtung (3) in einem Gehäuse (18) untergebracht ist, das aus dielektrischem Material hergestellt ist und eine gerippte Metallplatte/Krone (21) umfasst, die auch als Abdeckung wirkt, die an dem Ende der Wärmeabfangsstange (7) gegenüber dem Ende angeordnet ist, das das Erdungssystem (101) verbindet und mit diesem verbunden ist, um eine Wärmeableitung zu erzielen.

7. Vorrichtung (1) nach einem der vorhergehenden Ansprüche, **dadurch gekennzeichnet, dass** sie eine Sicherung (11) umfasst, die entlang einer elektrischen Verbindung zwischen dem mindestens einen Phaseneingang (2a, 2b) und der mindestens einen polaren Eingangselektrode (5) angeordnet ist.

8. Vorrichtung (1) nach einem der vorhergehenden Ansprüche, **dadurch gekennzeichnet, dass** sie eine Signaleinrichtung (12), vorzugsweise vom Leuchtentyp, umfasst, die außerhalb der Tuner-Dämpfer-Einrichtung (3) elektrisch zwischen der mindestens einen polaren Eingangselektrode (5) und der Wärmeableitungsstange (7) verbunden ist.

9. Vorrichtung (1) nach einem der vorhergehenden Ansprüche, **dadurch gekennzeichnet, dass** sie eine Resonanzantenne (13) umfasst, die in Kontakt mit einer Außenseite des Gehäuses (8) des Tuner-Dämpfers (3) angeordnet und ausgelegt ist, um die Anti-Elektrosmog-Arbeit des Tuner-Dämpfers (3) durch selektives Unterscheiden zwischen externen und lokalen elektromagnetischen Strahlungen in der Extreme zu halten.

10. Vorrichtung (1) nach Anspruch 9, **dadurch gekennzeichnet, dass** die Antenne (13) vorzugsweise flach ist, auf einem flachen Träger montiert ist und eine Vielzahl von konzentrischen Metallelementen (14) umfasst, vorzugsweise von rechteckiger oder quadratischer oder kreisförmiger Form, die voneinander getrennt sind.

11. Vorrichtung (1) nach Anspruch 10, **dadurch gekennzeichnet, dass** ein jedes der Metallelemente (14) an einem Ablösepunkt (15) gebrochen ist und die Position dieses Ablösepunkts (15) zwischen einem Element (14) und dem anderen in Bezug auf eine Mittelebene, die die Antenne (13) orthogonal schneidet, entgegengesetzt ist.

12. Vorrichtung (1) nach einem der vorhergehenden Ansprüche, **dadurch gekennzeichnet, dass** sie ein Außengehäuse oder einen Behälter (16) umfasst, das/der den Rest der Vorrichtung (1) aufnimmt, wobei das Außengehäuse oder der Behälter (16) als ein Modul für eine elektrische Schalttafel geformt ist, die angepasst ist, um auf einer DIN-Führung installiert zu werden.

13. Vorrichtung (1) nach Anspruch 12, **dadurch gekennzeichnet, dass** das Außengehäuse (16) aus Metall und außen geripptem Material (19) hergestellt ist; wobei das Gehäuse in Kontakt mit der Metallableitungsstange (7) steht, um endogene Wärme zu verteilen und zu zerstreuen.

14. Vorrichtung (1) nach einem der vorhergehenden Ansprüche, **dadurch gekennzeichnet, dass** sie ferner ausgebildet und ausgelegt ist, um auch Störungsphänomene zu lösen, die durch Oberschwingungen und Störaussendungen definiert sind, die nicht nur für die elektrische Versorgungsanlage, sondern insbesondere auch für elektrische und elektronische Benutzervorrichtungen schädlich sind, insbesondere wenn sie anspruchsvoll sind, die von der Vorrichtung mit Strom versorgt werden, immer mit der intrinsischen und ausschließlichen Fähigkeit, die Sicherheit zu gewährleisten.

15. Vorrichtung (1) nach einem der vorhergehenden Ansprüche, **dadurch gekennzeichnet, dass** sie ferner ausgebildet und ausgelegt ist, um auch lokale elektromagnetische Verschmutzung oder Elektrosmog zu lösen, d. h. in der Nähe der Vorrichtung selbst, immer mit der intrinsischen und ausschließlichen Fähigkeit, Sicherheit zu gewährleisten.

16. Elektrische Niederspannungsversorgungsanlage (100), umfassend:
- einen oder mehrere elektrische Phasenleiter; und
- eine Vorrichtung (1) nach einem der vorhergehenden Ansprüche,
wobei mindestens ein elektrischer Phasenleiter unter Schaltung mit dem Phaseneingang (2a, 2b) verbunden ist, um die Energielast externer und interner elektromagnetischer Spannung, die Überspannungen und Überströme verursacht, in mechanische Energie und in Wärmeenergie umzuwandeln.

## Revendications

1. Appareil (1) de prévention et d'amortissement des pics de tension et de courant d'origine interne et externe par rapport à une installation d'alimentation électrique à basse tension (100), basé sur la détection et la transformation de l'énergie électromagnétique à l'origine des surtensions et des surintensités, comprenant :
au moins une entrée de phase (2a, 2b) connectée, lors de l'utilisation, conjointement à une phase de l'installation d'alimentation électrique (100) pour recevoir un signal de tension électrique ;
un accordeur-amortisseur (3) comportant sa propre enveloppe (8 ; 18) et son volume interne (4), ce dernier comprenant un mélange d'un sédiment incohérent et non hygroscopique de particules d'un matériau piézoélectrique et pyroélectrique et d'un matériau inerte réfractaire, dans l'air, configuré pour transformer la charge d'énergie de la contrainte électromagnétique extérieure et intérieure, à l'origine des surtensions et des surintensités, en énergie mécanique et en énergie thermique ;
ledit accordeur-amortisseur (3) comprenant au moins une première électrode polaire d'entrée (5) partiellement immergée dans ledit mélange et en contact avec celui-ci ; ladite électrode polaire d'entrée (5) étant connectée à l'entrée de phase (2a, 2b) pour recevoir ledit signal électrique ;
ledit accordeur-amortisseur (3) comprenant au moins une barre (7) de dissipation thermique et électriquement conductrice au moins partiellement immergée à l'intérieur dudit mélange,
**caractérisé en ce que** ladite barre (7) de dissipation thermique et électriquement conductrice est reliée, lors de l'utilisation, à un système de mise à la terre (101).

2. Appareil (1) selon la revendication 1, **caractérisé en ce que** ledit sédiment incohérent dont est composé le mélange, qui est introduit dans le volume interne (4) de l'accordeur-amortisseur (3), comprend un semiconducteur.

3. Appareil (1) selon l'une quelconque des revendications précédentes, **caractérisé en ce que** l'enveloppe (8 ; 18) dudit accordeur-amortisseur (3) a la forme d'un cylindre et ladite première électrode polaire d'entrée (5) est introduite à travers l'enveloppe (8 ; 18) cylindrique en un point donné, ladite barre (7) de dissipation étant introduite à travers une base (10) dudit cylindre sensiblement dans une position centrale et orthogonalement à la base (10).

4. Appareil (1) selon l'une quelconque des revendications précédentes, **caractérisé en ce que** ladite première électrode polaire d'entrée (5) s'étend entre deux extrémités opposées, l'une intérieure étant immergée partiellement dans le mélange et l'autre extérieure étant reliée à l'entrée de phase (2a, 2b), ladite extrémité intérieure ayant la forme d'une demisphère.

5. Appareil (1) selon l'une quelconque des revendications précédentes, **caractérisé en ce qu'**il comprend une seconde entrée de phase (2a, 2b) connectée, lors de l'utilisation, à une autre phase de l'installation d'alimentation électrique à basse tension (100) ; ledit accordeur-amortisseur (3) comprenant au moins une seconde électrode polaire d'entrée, séparée de la première, et partiellement immergée à l'intérieur dudit mélange et en contact avec celui-ci ; ladite seconde entrée de phase (2a, 2b) étant connectée à ladite seconde électrode polaire d'entrée.

6. Appareil (1) selon l'une quelconque des revendications précédentes, **caractérisé en ce que** ledit dispositif accordeur-amortisseur (3) est logé à l'intérieur d'une enveloppe (18) réalisée en matériau diélectrique et comprend une plaque/couronne métallique (21) à ailettes, qui se comporte également comme un couvercle, étant disposée à l'extrémité de la barre d'interception thermique (7) opposée à l'extrémité reliant le système de mise à la terre (101) et connectée à ce dernier pour accomplir la dissipation thermique.

7. Appareil (1) selon l'une quelconque des revendications précédentes, **caractérisé en ce qu'**il comprend un fusible de sécurité (11) interposé le long d'une connexion électrique entre l'au moins une entrée de phase (2a, 2b) et l'au moins une électrode polaire d'entrée (5).

8. Appareil (1) selon l'une quelconque des revendications précédentes, **caractérisé en ce qu'**il comprend un appareil de signalisation (12), de préférence de type lumineux, connecté électriquement entre l'au moins une électrode polaire d'entrée (5) et la barre (7) de dissipation thermique à l'extérieur du dispositif accordeur-amortisseur (3).

9. Appareil (1) selon l'une quelconque des revendications précédentes, **caractérisé en ce qu'**il comprend une antenne résonnante (13) disposée en contact avec un extérieur de l'enveloppe (8) de l'accordeur-amortisseur (3) et configurée pour maintenir le travail d'anti-électropollution de l'accordeur-amortisseur (3) aux extrêmes en distinguant sélectivement entre le rayonnement électromagnétique externe et le rayonnement électromagnétique local.

10. Appareil (1) selon la revendication 9, **caractérisé en ce que** ladite antenne (13) est de préférence plate, montée sur un support plat et comprend une pluralité d'éléments métalliques (14) concentriques, de préférence de forme rectangulaire, carrée ou circulaire, qui sont séparés les uns des autres.

11. Appareil (1) selon la revendication 10, **caractérisé en ce que** chacun desdits éléments métalliques (14) est brisé à un point de détachement (15) et que la position de ce point de détachement (15) entre un élément (14) et l'autre est opposée par rapport à un plan médian qui coupe orthogonalement l'antenne (13).

12. Appareil (1) selon l'une quelconque des revendications précédentes, **caractérisé en ce qu'**il comprend une enveloppe extérieure ou récipient (16) qui loge le reste de l'appareil (1), dans lequel ladite enveloppe extérieure ou récipient (16) a la forme d'un module pour un tableau électrique adapté pour être installé sur un guide DIN.

13. Appareil (1) selon la revendication 12, **caractérisé en ce que** ladite enveloppe extérieure (16) est en métal et en matériau à ailettes externes (19) ; ladite enveloppe étant en contact avec ladite barre de dissipation métallique (7) de manière à répartir et à disperser la chaleur endogène.

14. Appareil (1) selon l'une quelconque des revendications précédentes, **caractérisé en ce qu'**il est en outre formé et configuré pour résoudre également les phénomènes de perturbation définis par les harmoniques et les émissions parasites qui sont nuisibles non seulement à l'installation d'alimentation électrique mais aussi en particulier aux appareils électriques et électroniques pour utilisateur, surtout s'ils sont sophistiqués, qui sont alimentés par l'appareil, toujours avec la capacité intrinsèque et exclusive d'assurer la sécurité.

15. Appareil (1) selon l'une quelconque des revendications précédentes, **caractérisé en ce qu'**il est en outre formé et configuré pour résoudre également la pollution électromagnétique locale ou électropollution, c'est-à-dire à proximité de l'appareil lui-même, toujours avec la capacité intrinsèque et exclusive de garantir la sécurité.

16. Installation d'alimentation électrique à basse tension (100), comprenant :
- un ou plusieurs conducteurs électriques de phase ; et
- un appareil (1), selon l'une quelconque des revendications précédentes,
dans laquelle au moins un conducteur électrique de phase est connecté conjointement à l'entrée de phase (2a, 2b) de manière à transformer la charge d'énergie de la contrainte électromagnétique extérieure et intérieure, à l'origine des surtensions et des surintensités, en énergie mécanique et en énergie thermique.
